# EUROPEAN PATENT APPLICATION

(11) **EP 2 813 317 A1**
(43) Date of publication of application: **17.12.2014**
(21) Application number: 14171259.6
(22) Date of filing: 05.06.2014
(51) Int. Cl.: B23Q 1/38, B23Q 1/70, B23Q 11/00, F16C 32/06

(54) **Main spindle unit with damper bearing**

(30) Priority: 10.06.2013 JP 2013121926
(71) Applicant: JTEKT CORPORATION, Osaka-shi Osaka 542-8502 (JP)
(72) Inventor: Matsunaga, Shigeru, Osaka 542-8502 (JP); Tanase, Ryota, Osaka 542-8502 (JP)
(74) Representative: TBK

(57) **Abstract**

Amain spindle unit (1) includes: a damper bearing (50) that restricts vibrations of a main spindle (20) by being supplied with a fluid; a fluid supply device (60) that supplies the fluid to the damper bearing (50), and that is able to adjust a flow rate (Q) of the fluid; a vibration detection sensor (70) that detects a vibration of the main spindle (20); and a controller (80) that adjusts the flow rate (Q) of the fluid supplied from the fluid supply device (60), based on the magnitude of the vibration detected by the vibration detection sensor (70).

## Description

### BACKGROUND OF THE INVENTION

### 1. Field of the Invention

The invention relates to a main spindle unit included in a machine tool.

### 2. Description of the Related Art

For example, Japanese Patent Application Publication No. 2000-280102 describes a damper for a spindle that is driven to be rotated (hereinafter, simply referred to as "rotated"). The damper for the spindle has a damper pocket defined between the outer peripheral face of the spindle and the inner peripheral face of a support member that supports the spindle. Liquid is supplied to the damper pocket to induce damping resistance, and the pressure of the liquid is variably controlled based on the rotational speed of the spindle. Thus, vibrations of the spindle are restricted.

Japanese Patent Application Publication No. 2011-235404 describes a main spindle unit of a machine tool, which delivers the damping performance based on the direction of vibrations in the radial direction of a main spindle to restrict the vibrations of the main spindle. The main spindle unit has at least three oil discharge openings which are formed at intervals in the circumferential direction, and through which oil is discharged into a radial clearance between the outer peripheral face of the main spindle and a housing that supports the main spindle. Vibrations of the main spindle are restricted by varying, for example, the pressures of the oils to be supplied to the oil discharge openings based on the direction of vibrations in the radial direction of the main spindle, which is detected by a displacement sensor.

However, in these main spindle units described above, the fluid is always supplied irrespective of the magnitudes of vibrations. Because the fluid is supplied around the outer peripheral face of the main spindle that is rotating, the fluid is repeatedly sheared to generate heat. Thus, thermal displacement occurs in the main spindle and the housing, which influences the machining accuracy. Further, the fluid resistance increases a loss in the driving force for rotating the main spindle.

### SUMMRY OF THE INVENTION

One object of the invention is to provide a main spindle unit that is able to restrict vibrations of a main spindle while restricting heat generation of a fluid and a loss of driving force for rotating the main spindle, by controlling the flow rate of the fluid that is supplied to the rotating main spindle.

A main spindle unit according to an aspect of the invention includes: a main spindle that retains a tool and that is driven to be rotated; a rolling bearing by which the main spindle is rotatably supported; a damper bearing that is located closer to the tool than the rolling bearing is, and that restricts vibrations of the main spindle by being supplied with a fluid; a fluid supply device that supplies the fluid to the damper bearing, and that is able to adjust a flow rate of the fluid; a vibration detection sensor that detects a vibration of the main spindle; and a controller that adjusts the flow rate of the fluid supplied from the fluid supply device, based on a magnitude of the vibration detected by the vibration detection sensor.

With the main spindle unit according to the above aspect, the controller adjusts the flow rate of the fluid supplied by the fluid supply device based on the magnitude of vibration detected by the vibration detection sensor, and thus it is possible to control the damping effect provided by the damper bearing that restricts the vibration. That is, when a large vibration such as chattering is generated in the main spindle, the flow rate of the fluid is increased, whereas when the vibration is small, the flow rate of the fluid is reduced. The flow rate of the fluid is controlled in this way to restrict the vibrations of the main spindle. Thus, unlike in the case where the fluid is supplied irrespective of the magnitude of vibration, the controller is able to restrict the vibrations of the main spindle while heat generation of the fluid and a loss in driving force are restricted.

In the main spindle unit according to the above aspect, when the magnitude of the vibration becomes a value equal to or greater than a first threshold while the fluid is supplied at a first flow rate by the fluid supply device, the controller may change the flow rate of the fluid from the first flow rate to a second flow rate that is higher than the first flow rate.

In the main spindle unit having the above configuration, the controller controls the fluid supply device to adjust the flow rate of the fluid on the basis of a set threshold. Thus, the controller is able to more appropriately restrict the vibrations of the main spindle while heat generation of the fluid and a loss in driving force are restricted.

In the main spindle unit having the above configuration, after a first set time has elapsed since the flow rate of the fluid is changed from the first flow rate to the second flow rate, the controller may change the flow rate of the fluid to a third flow rate that is lower than the second flow rate but higher than the first flow rate.

In the main spindle unit having the above configuration, when the controller controls the fluid supply device to change the flow rate from the second flow rate to the third flow rate, the damping effect provided by the damper bearing is reduced. Thus, the magnitude of vibration is greater in the case where the flow rate of the fluid is the third flow rate than in the case where the flow rate is the second flow rate. Thus, the vibration is easily detected by the vibration detection sensor. In the case where the flow rate of the fluid is the third flow rate, the magnitude of vibration is restricted more greatly than in the case where the flow rate of the fluid is the first flow rate at which the damping effect is lower than that at the third flow rate. Thus, the controller is able to confirm the vibration generation status while restricting the vibration, and thus the flow rate of the fluid is appropriately adjusted based on the vibration generation status and the magnitude of vibration

In the main spindle unit having the above configuration, when the magnitude of vibration becomes a value equal to or greater than a second threshold that is set equal to or smaller than the first threshold while the fluid is supplied at the third flow rate by the fluid supply device after the flow rate of the fluid is changed from the second flow rate to the third flow rate, the controller may change the flow rate of the fluid to the second flow rate.

In the main spindle unit having the above configuration, when the controller changes the flow rate of the fluid to the third flow rate and thus confirms the vibration generation status while restricting the vibration, if the magnitude of vibration becomes greater than a set threshold, the controller controls the fluid supply device to increase the flow rate. In this way, the controller is able to more appropriately adjust the flow rate of the fluid.

In the main spindle unit having the above configuration, if the magnitude of vibration is smaller than the second threshold but is equal to or greater than a third threshold that is set smaller than the second threshold when a second set time has elapsed since the flow rate of the fluid is changed from the second flow rate to the third flow rate, the controller may maintain the flow rate of the fluid at the third flow rate.

In the main spindle unit having the above configuration, when the second set time has elapsed since the flow rate of the fluid is changed to the third flow rate at which the vibration generation status can be confirmed while the vibration is restricted, if the magnitude of vibration is within a set threshold range, the controller controls the fluid supply device to maintain the flow rate at an appropriate value. In this way, the controller is able to more appropriately adjust the flow rate.

In the main spindle unit having the above configuration, if the magnitude of vibration is smaller than a second threshold that is set equal to or smaller than the first threshold and is smaller than a third threshold that is set smaller than the second threshold when a second set time has elapsed since the flow rate of the fluid is changed from the second flow rate to the third flow rate, the controller may change the flow rate of the fluid to the first flow rate.

When the second set time has elapsed since the flow rate of the fluid is changed to the third flow rate at which the vibration generation status can be confirmed while the vibration is restricted, if the magnitude of vibration is smaller than the set threshold, the controller controls the fluid supply device to reduce the flow rate. In this way, the controller is able to more appropriately adjust the flow rate.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a sectional view of a main spindle unit according to an embodiment of the invention, taken along the axial direction of the main spindle unit;
FIG. 2 is an enlarged sectional view of a damper bearing illustrated in FIG. 1, taken along the axial direction;
FIG. 3 illustrates flowcharts of control programs executed by a controller illustrated in FIG. 1, wherein solid lines with arrows indicate a flowchart in an embodiment of the invention and a dashed line with an arrow indicates a difference of a flowchart in a modified example of the embodiment of the invention from the embodiment of the invention;
FIG. 4A is a time chart illustrating an operation according to the flowchart in FIG. 3 in the embodiment of the invention, and indicating the magnitudes of vibrations of a main spindle;
FIG. 4B is a time chart illustrating the operation according to the flowchart in FIG. 3 in the embodiment of the invention, and indicating the flow rate of a fluid;
FIG. 5A is a time chart illustrating an operation according to the flowchart in FIG. 3 in a modified example of the embodiment of the invention, and indicating the magnitudes of vibrations of a main spindle; and
FIG. 5B is a time chart illustrating the operation according to the flowchart in FIG. 3 in a modified example of the embodiment of the invention, and indicating the flow rate of a fluid.

### DETAILED DESCRIPTION OF EMBODIMENTS

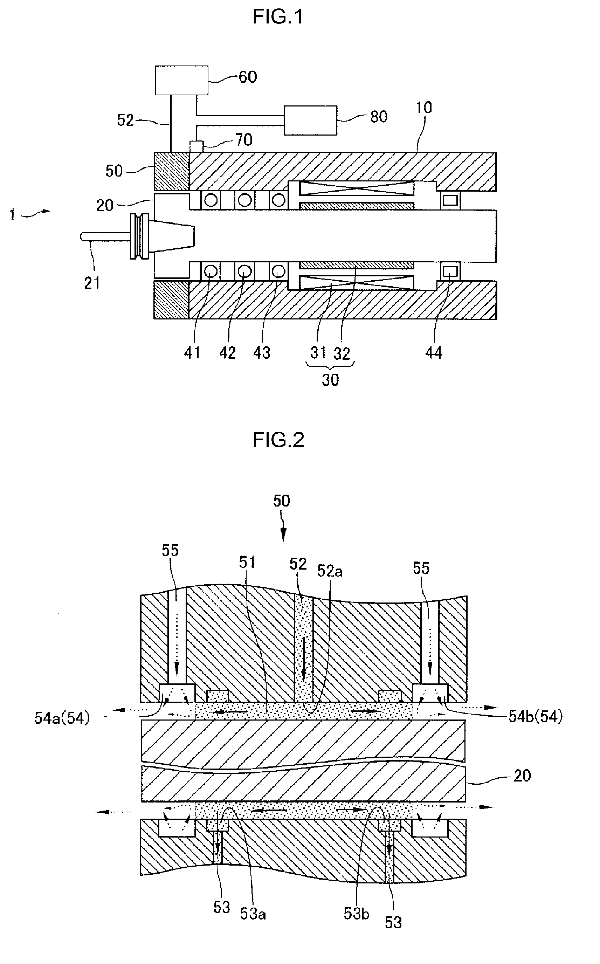

Hereinafter, a main spindle unit 1 according to an embodiment of the invention will be described with reference the accompanying drawings. With reference to FIG. 1, the configuration of the main spindle unit 1 will be described. As illustrated in FIG. 1, the main spindle unit 1 includes a housing 10, a main spindle 20, a motor 30, a plurality of rolling bearings 41 to 44, a damper bearing 50, a fluid supply device 60, a vibration detection sensor 70 and a controller 80.

The housing 10 is formed in a hollow tubular shape, and accommodates the main spindle 20. The main spindle 20 holds a tool 21, and is driven to be rotated (hereinafter, simply referred to as "rotated"). Specifically, the main spindle 20 holds the tool 21, on its distal end side (the left side in FIG. 1), and is rotated by the motor 30. The motor 30 is located in the housing 10, and includes a stator 31 secured to the housing 10 and a rotor 32 secured to the main spindle 20.

The rolling bearings 41 to 44 support the main spindle 20 such that the main spindle 20 is rotatable relative to the housing 10. The rolling bearings 41 to 43 are, for example, ball bearings, and are disposed closer to the tool 21 than the motor 30 is. The bearing 44 is, for example, a roller bearing, and is disposed on the opposite side (rear end side) of the motor 30 from the tool 21. That is, the rolling bearings 41 to 44 are disposed such that the motor 30 is interposed between the rolling bearings 41 to 43 and the rolling bearing 44 in the axial direction.

The damper bearing 50 is disposed closer to the tool 21 than the rolling bearings 41 to 44 are, and restricts vibrations of the main spindle 20 by being supplied with a fluid. As illustrated in FIG. 2, the damper bearing 50 has a damping portion 51, a fluid supply passage 52, drains 53, air supply annular grooves 54 and air supply passages 55. In FIG. 2, fluid flowing directions are indicated by solid lines with arrows, whereas air flowing directions are indicated by dashed lines with arrows.

The damping portion 51 is an annular clearance between the inner peripheral face of the damper bearing 50 and the outer peripheral face of the main spindle 20. The annular clearance extends in the circumferential direction of the damper bearing 50. As the fluid is supplied to the damping portion 51, the damping portion 51 the damping effect of restricting vibrations of the main spindle 20 is produced. The damping effect varies depending on a flow rate Q of the fluid that is supplied to the damping portion 51. Specifically, the damping effect is increased as the flow rate Q of the fluid is increased, whereas the damping effect is reduced as the flow rate Q of the fluid is reduced. A damping coefficient indicating the degree of the damping effect is determined based on a flow passage resistance corresponding to, for example, a size of the clearance, characteristics of the fluid such as a viscosity, and a flow rate of the fluid. The fluid in the present embodiment is, for example, oil.

The fluid supply passage 52 is connected at one end to the fluid supply device 60. The fluid supplied from the fluid supply device 60 is delivered though the fluid supply passage 52 and is then introduced into the damping portion 51 from an inlet port 52a. At least one inlet ports 52a is formed in the inner peripheral face of the damper bearing 50. When there are multiple inlet ports 52a, the inlet ports 52 are arranged along the circumferential direction of the damper bearing 50.

The drains 53 are annular recesses formed in the inner peripheral face of the damper bearing 50 to extend along the circumferential direction of the damper bearing 50. The drains 53 include an annular groove 53a located closer to the tool 21 than the inlet port 52a of the fluid supply passage 52 is, and an annular groove 53b located on the opposite side of the inlet port 52a from the tool 21. The fluid is introduced from the damping portion 51 into the drains 53 through the annular grooves 53a, 53b, and is then discharged through the drains 53 into a tank (not illustrated) that stores the fluid.

The air supply annular grooves 54 are annular recesses formed in the inner peripheral face of the damper bearing 50 to extend along the circumferential direction of the damper bearing 50. The air supply annular grooves 54 include an air supply annular groove 54a located closer to the tool 21 than the annular groove 53a is, and an air supply annular groove 54b located on the opposite side of the annular groove 53a from the tool 21. The air supply annular grooves 54 deliver air supplied from an air pump (not illustrated) through the air supply passages 55, into the damping portion 51. The thus delivered air constitutes air seals that prevent the fluid from being discharged from the damping portion 51 toward the tool 21 and toward the rolling bearings 41 to 44.

The fluid supply device 60 supplies the fluid into the damper bearing 50, and adjusts the flow rate Q of the fluid. The fluid supply device 60 includes a flow rate controller having a flow rate detection sensor and a spool valve (both not illustrated) and a pump portion. The fluid supply device 60 drives the pump portion to receive the fluid from the tank. The fluid supply device 60 adjusts the flow rate Q of the fluid to achieve a set flow rate, based on a detection signal from the flow rate detection sensor in addition to a rotational speed of the pump portion or a position of the spool valve, or combination of the rotational speed of the pump portion and the position of the spool valve, and then supplies the fluid to the damper bearing 50 through the fluid supply passage 52.

The vibration detection sensor 70 detects a vibration of the main spindle 20. As illustrated in FIG. 1, the vibration detection sensor 70 is disposed on the housing 10 at a position on the tool 21 side, and detects the vibration of the main spindle 20 transmitted to the vibration detection sensor 70 through the bearings 41 to 44, 50 and the housing 10. In the present embodiment, the vibration detection sensor 70 detects a vibration of the main spindle 20 in the circumferential direction. The vibration detection sensor 70 is, for example, an acceleration sensor that detects a vibrational acceleration.

The controller 80 adjusts the flow rate Q of the fluid supplied from the fluid supply device 60 based on the magnitude of the vibration detected by the vibration detection sensor 70. The controller 80 includes a CPU that executes computation, memories such as a ROM and a RAM that store, for example, programs, and an input-output interface through which information is exchanged.

The controller 80 is electrically connected to both the fluid supply device 60 and the vibration detection sensor 70. The flow rate Q of the fluid, which is detected by the flow rate detection sensor of the fluid supply device 60, is transmitted in the form of a detection signal to the controller 80. The vibration of the main spindle 20, which is detected by the vibration detection sensor 70, is transmitted to the controller 80 in the form of a detection signal.

The controller 80 carries out frequency analysis on the detection signal transmitted from the vibration detection sensor 70 with the use of a FFT, and computes magnitudes X of the vibrations at respective frequencies. The controller 80 sets the flow rate Q of the fluid on the basis of the thus computed magnitudes X of the vibrations, and transmits the thus computed value to the fluid supply device 60.

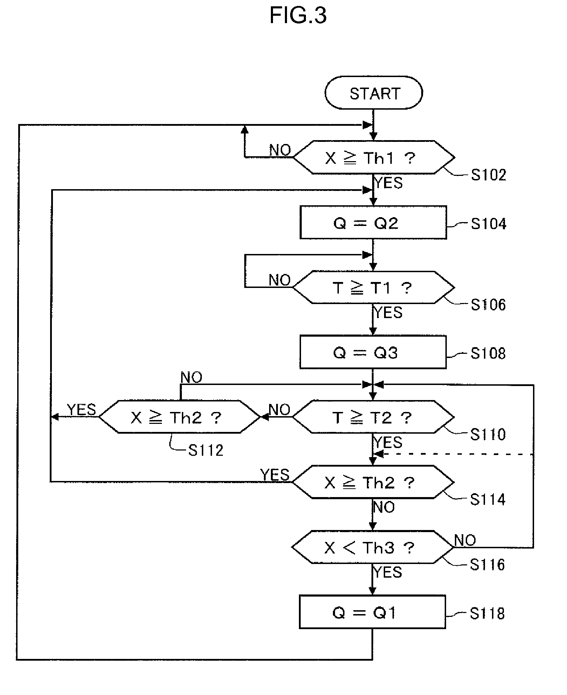

The operation of the main spindle unit 1 will be described with reference to a flowchart illustrated in FIG. 3. The description will be made on the assumption that the main spindle unit 1 carries out, for example, a cutting work on metal, and the controller 80 sets the flow rate Q of the fluid to a first flow rate Q1. The first flow rate Q1 is a value of the flow rate Q of the fluid, which is set in advance by a worker on the basis of, for example, machining conditions, and is set equal to or greater than 0 m³ / s. In the present embodiment, the flow rate Q1 set to, for example, 0 m³ / s.

The controller 80 determines whether the magnitude X of vibration is equal to or greater than a first threshold Th1 (step S102). The first threshold Th1 is a threshold of the magnitude X of vibration, which is set to restrict the vibrations before the magnitude X of vibration becomes larger, in the case where the vibrations develop to chattering in which the magnitude X of vibration is large.

If the magnitude X of vibration is smaller than the first threshold Th1, the controller 80 makes a negative determination in step S102, and controls the fluid supply device 60 to maintain the flow rate Q at the first flow rate Q1. On the other hand, if the magnitude X of vibration becomes equal to or greater than the first threshold Th1, the controller 80 makes an affirmative determination in step S102, and controls the fluid supply device 60 to change the flow rate Q of the fluid to a second flow rate Q2 (step S104). The second flow rate Q2 is a flow rate that allows the damper bearing 50 to exhibit such a damping effect that the vibration of which the magnitude X increases up to the first threshold Th1 if the flow rate Q is equal to the first flow rate Q1, is restricted to the vibration having the magnitude X equal to or smaller than, for example, 5%. The second flow rate Q2 is, for example, 2 · 10⁻⁴ m³ / s.

The controller 80 starts measuring a time T elapsed since the flow rate Q is changed to the second flow rate Q2, and determines whether a first set time T1 has elapsed (step S106). The first set time T1 is set in advance by the worker on the basis of, for example, machining conditions. In the present embodiment, the first set time T1 is set to, for example, three seconds.

If the time T is shorter than the first set time T1, the controller 80 makes a negative determination in step S106, and maintains the flow rate Q at the second flow rate Q2. On the other hand, if the time T is equal to or longer than the first set time T1, the controller 80 makes an affirmative determination in step S106, and controls the fluid supply device 60 to change the flow rate Q to a third flow rate Q3. The third flow rate Q3 is a flow rate that allows the damper bearing 50 to exhibit such a damping effect that the vibration of which the magnitude X increases up to the first threshold Th1 if the flow rate Q is equal to the first flow rate Q1, is restricted to the vibration having the magnitude X of, for example, about 50%. The third flow rate Q3 is, for example, 1 · 10⁻⁴ m³ / s.

The controller 80 starts measuring a time T elapsed since the flow rate Q is changed to the third flow rate Q3, and determines whether a second set time T2 has elapsed (step S110). The second set time T2 is set in advance by the worker on the basis of, for example, machining conditions. In the present embodiment, the second set time T2 is set to, for example, three seconds.

If the time T is shorter than the second set time T2, the controller 80 makes a negative determination in step S110, and determines whether the magnitude X of vibration is equal to or greater than a second threshold Th2 (step S112). The second threshold Th2 is set to, for example, a threshold of the magnitude X of vibration, which is set to substantially the same magnitude of vibration as the magnitude X of vibration obtained when the vibration having the magnitude X that becomes the first threshold Th1 if the flow rate Q is the first flow rate Q1, is restricted by the damping effect that is exhibited by the damper bearing 50 at the third flow rate Q3. That is, in the present embodiment, the vibration having the magnitude X, which is the first threshold Th1 in the case of the first flow rate Q1, is restricted down to about 50% of the first threshold Th1 by the damper bearing 50 in the case of the third flow rate Q3, and thus the second threshold Th2 is set to about 50% of the magnitude of vibration at the first threshold Th1.

If the magnitude X of vibration is smaller than the second threshold Th2, the controller 80 makes a negative determination in step S112, and controls the fluid supply device 60 to maintain the flow rate Q at the third flow rate Q3. On the other hand, if the magnitude X of vibration becomes equal to or greater than the second threshold Th2 in the case where the fluid is supplied at the third flow rate Q3 by the fluid supply device 60, the controller 80 makes an affirmative determination in step S 112, and the controller 80 controls the fluid supply device 60 to change the flow rate Q to the second flow rate Q2 (step S104). Then, the controller 80 executes the processes from steps S104 to S110 in the flowchart.

On the other hand, if the time T becomes equal to or longer than the second set time T2, the controller 80 makes an affirmative determination in step S110, and determines in step S 114 whether the magnitude X of vibration is equal to or greater than the second threshold Th2. If the magnitude X of vibration is equal to or greater than the second threshold Th2, the controller 80 makes an affirmative determination in step S 114, and controls the fluid supply device 60 to change the flow rate Q to the second flow rate Q2 (step S104). Then, the controller 80 executes the processes from step S104 to S114 in the flowchart.

On the other hand, if the magnitude X of vibration is smaller than the second threshold Th2, the controller 80 makes a negative determination in step S114, and then determines whether the magnitude X of vibration is smaller than the third threshold Th3 (step S116). The third threshold Th3 is set to, for example, a value that is about 50 % of the magnitude of vibration at the second threshold Th2. In the present embodiment, the second threshold Th2 is about 50% of the first threshold Th1, and thus the third threshold Th3 is set to a value that is about 25% of the magnitude of vibration at the first threshold Th1.

If the magnitude X of vibration is equal to or greater than the third threshold Th3, the controller 80 makes a negative determination in step S116. At this time, the magnitude X of vibration is equal to or greater than the third threshold Th3 but smaller than the second set time T2. In this case, the controller 80 controls the fluid supply device 60 to maintain the flow rate Q at the third flow rate Q3, and then starts measurement of the time T (step S110). Then, the controller 80 executes the processes from step S110 to S 116 in the flowchart.

On the other hand, if the magnitude X of vibration is smaller than the third threshold Th3, the controller 80 makes an affirmative determination in step S116, and controls the fluid supply device 60 to change the flow rate Q to the first flow rate Q1 (step S 118). Then, the controller 80 executes the above-described processes in the flowchart again from step S102.

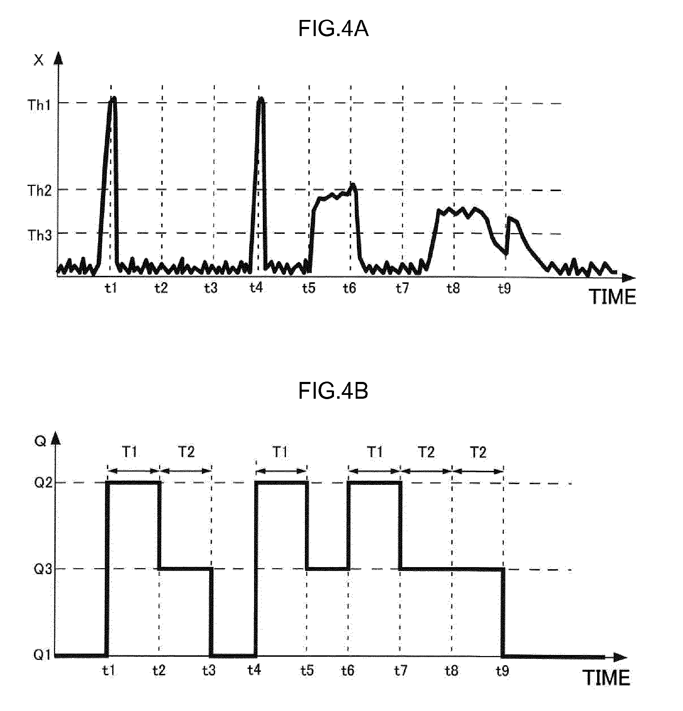

Next, the operation of the main spindle unit 1 according to the above-described flowchart will be described with reference to time charts illustrated in FIG. 4A and FIG. 4B. The operation of the main spindle unit 1 will be described on the assumption that the main spindle unit 1 carries out, for example, a cutting work on metal, and the controller 80 sets the flow rate Q of the fluid to the first flow rate Q1. The time chart illustrated in FIG. 4A indicates the magnitude X of vibration, which is the greatest among the magnitudes X of vibrations at various frequencies. The time chart illustrated in FIG. 4B indicates the flow rate Q of the fluid.

As illustrated in the time chart in FIG. 4A, before time t1, no large vibrations such as chattering are generated in the main spindle 20. The vibrations generated before time t1 are restricted by the damping effect provided by the rolling bearings 41 to 44.

After that, a vibration V1 is generated during machining, and the magnitude X of vibration reaches the first threshold Th1 (time t1; step S102). At this time, the controller 80 controls the fluid supply device 60 to change the flow rate Q of the fluid to the second flow rate Q2 (step S104). When the flow rate Q of the fluid supplied to the damper bearing 50 reaches the second flow rate Q2, the damping effect is enhanced, and thus the vibration V1 is restricted so that the magnitude X of vibration is reduced to a value equal to or smaller than 5% of the first threshold Th1.

Then, the controller 80 controls the fluid supply device 60 to change the flow rate Q to the third flow rate Q3 (step S108) after the time T becomes equal to or longer than the first set time T1 (time t2; step S106). At this time, because the behavior of the magnitude X of vibration does not vary even though the damping effect provided by the damper bearing 50 is lowered, it is determined that the vibration V1 has already been settled.

The controller 80 determines the magnitude X of vibration (step S114, step S 116) after the time T becomes equal to or longer than the second set time T2 while the magnitude X of vibration remains smaller than the second threshold Th2 (time t3: stepsS110, S112). At this time, because the magnitude X of vibration is smaller than the third threshold Th3, the controller 80 controls the fluid supply device 60 to set the flow rate Q to the first flow rate Q1 (step S 114 to step S118).

After that, a vibration V2 is generated, and when the magnitude X of vibration reaches the first threshold Th1 (time t4; step S102), the controller 80 controls the fluid supply device 60 to change the flow rate Q to the second flow rate Q2 (step S104). Thus, the vibration V2 is restricted because the damping effect provided by the damper bearing 50 is increased. Then, the controller 80 controls the fluid supply device 60 to change the flow rate Q to the third flow rate Q3 (time t5; step S108) after the time T becomes equal to or longer than the first set time T1 (step S106). At this time, the magnitude X of vibration becomes larger because the damping effect is reduced, and thus it is determined that the vibration V2 has not been settled or another vibration V3 is generated.

Before the time T becomes equal to or longer than the second set time T2, if the vibration V2 (or the vibration V3) becomes larger so that the magnitude X of vibration becomes equal to or greater than the second threshold Th2 (time t6; step S110 to step S 112), the controller 80 controls the fluid supply device 60 to change the flow rate Q to the second flow rate Q2 (step S104). Thus, the damping effect is increased, and thus the vibration V2 (or the vibration V3) is restricted.

Then, when the time T becomes equal to or longer than the first set time T1 (step S106), the controller 80 changes the flow rate Q to the third flow rate Q3 (time t7; step S108). At this time, the behavior of the magnitude X of vibration does not vary even though the damping effect provided by the damper bearing 50 is reduced. Thus, it is determined that the vibration V2 (or the vibration V3) has already been settled. Then, the controller 80 starts the measurement of the time T (step S110).

Then, a vibration V4 is generated before the time T becomes equal to or longer than the second set time T2, and when the time T becomes equal to or longer than the second set time T2 (time t8; step S110), the magnitude of the vibration V4 is a value between the second threshold Th2 and the third threshold Th3. Thus, the controller 80 makes a negative determination in each of step S 114 and step S 116, and maintains the flow rate Q at the third flow rate Q3. At this time, because the flow rate Q is not changed, the damping effect is not changed. Thus, the behavior of the magnitude X of the vibration V4 does not vary. Then, the controller 80 starts the measurement of the time T (step S110).

Because settlement of the vibration V4 is started before the time T becomes equal to or longer than the second set time T2, and the magnitude X of the vibration V4 is smaller than the third threshold Th3 when the time T becomes equal to or longer than the second set time T2 (time t9; step S110), the controller 80 changes the flow rate Q to the first flow rate Q1 (step S 116 to step S118).

At this time, because the damping effect is reduced as the flow rate Q is reduced, the magnitude X of the vibration V4 is increased. However, the magnitude X of vibration is smaller than the first threshold Th1, and thus the controller 80 maintains the flow rate Q at the first flow rate Q1 (step S102). Further, because the vibration V4 is settled as it is, the controller 80 maintains the flow rate Q at the first flow rate Q1 (step S102).

According to the present embodiment, the controller 80 adjusts the flow rate Q of the fluid supplied by the fluid supply device 60 based on the magnitude of vibration detected by the vibration detection sensor 70, and thus it is possible to control the damping effect provided by the damper bearing 50 that restricts the vibration. That is, when a large vibration such as chattering is generated in the main spindle 20, the flow rate Q of the fluid is increased, whereas when the vibration is small, the flow rate W of the fluid is reduced. The flow rate Q of the fluid is controlled in this way to restrict the vibrations of the main spindle 20. Thus, unlike in the case where the fluid is supplied irrespective of the magnitude of vibration, the controller 80 is able to restrict the vibrations of the main spindle 20 while heat generation of the fluid and a loss in driving force are restricted.

The controller 80 controls the fluid supply device 60 to adjust the flow rate Q of the fluid on the basis of a set threshold. Thus, the controller 80 is able to more appropriately restrict the vibrations of the main spindle 20 while heat generation of the fluid and a loss in driving force are restricted.

When the controller 80 controls the fluid supply device 60 to change the flow rate Q from the second flow rate Q2 to the third flow rate Q3, the damping effect provided by the damper bearing 50 is reduced. Thus, the magnitude X of vibration is greater in the case where the flow rate Q of the fluid is the third flow rate Q3 than in the case where the flow rate Q is the second flow rate Q2. Thus, the vibration is easily detected by the vibration detection sensor 70. In the case where the flow rate Q of the fluid is the third flow rate Q3, the magnitude X of vibration is restricted more greatly than in the case where the flow rate Q of the fluid is the first flow rate Q1 at which the damping effect is lower than that at the third flow rate Q3. Thus, the controller 80 is able to confirm the vibration generation status while restricting the vibration, and thus the flow rate Q of the fluid is appropriately adjusted based on the vibration generation status and the magnitude X of vibration

When the controller 80 changes the flow rate Q of the fluid to the third flow rate Q3 and thus confirms the vibration generation status while restricting the vibration, if the magnitude X of vibration becomes greater than a set threshold, the controller 80 controls the fluid supply device 60 to increase the flow rate Q. In this way, the controller 80 is able to more appropriately adjust the flow rate Q of the fluid.

When the second set time T2 has elapsed since the flow rate Q of the fluid is changed to the third flow rate Q3 at which the vibration generation status can be confirmed while the vibration is restricted, if the magnitude X of vibration is within a set threshold range, the controller 80 controls the fluid supply device 60 to maintain the flow rate Q at an appropriate value. In this way, the controller 80 is able to more appropriately adjust the flow rate Q.

When the second set time T2 has elapsed since the flow rate Q of the fluid is changed to the third flow rate Q3 at which the vibration generation status can be confirmed while the vibration is restricted, if the magnitude X of vibration is smaller than the set threshold, the controller 80 controls the fluid supply device 60 to reduce the flow rate Q. In this way, the controller 80 is able to more appropriately adjust the flow rate Q.

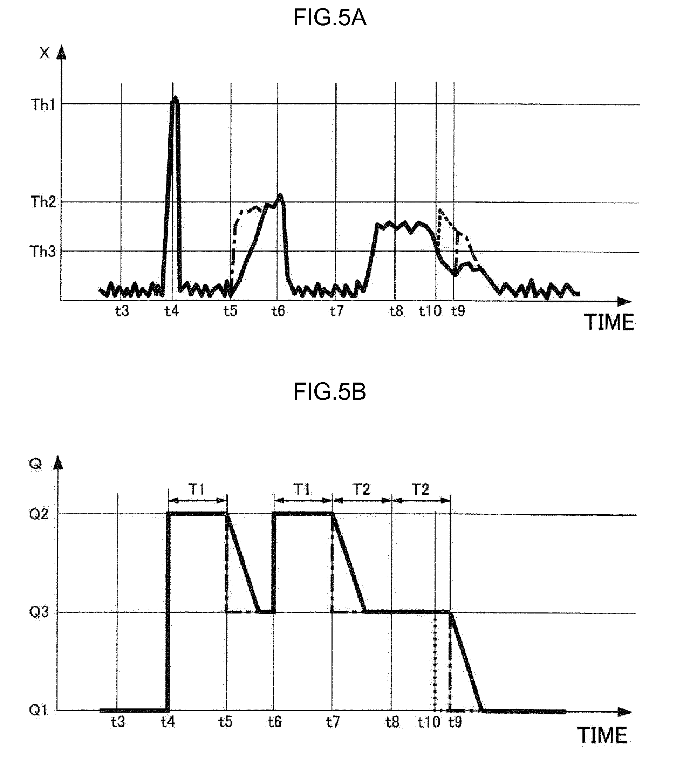

Next, a first modified example of the above-described embodiment of the invention will be described. In the above-described embodiment, when the flow rate Q of the fluid is reduced, for example, the flow rate Q of the fluid is changed from the second flow rate Q2 to the third flow rate Q3 (times t2, t5, t7) or is changed from the third flow rate Q3 to the first flow rate Q1 (times t3, t9), the flow rate Q is changed within a shortest time as indicated by alternate long and short dash lines illustrated in FIG. 5B. Alternatively, as indicated by the solid lines illustrated in FIG. 5B, the flow rate Q may be gradually reduced. In this case, because the damping effect provided by the damper bearing 50 is gradually reduced, the magnitude X of vibration does not vary in a short time unlike in the above-described embodiment in which the magnitude X of vibration varies as indicated by the alternate long and short dash lines, but gradually varies as indicated by the solid lines during a period from time t5 to time t6 and after time t9.

Next, a second modified example of the above-described embodiment of the invention will be described. In the above-described embodiment, in the flowchart of the control program illustrated in FIG. 3, if the controller 80 makes a negative determination in step S 116, the controller 80 starts the measurement of the time T in step S110, and determines whether the second set time T2 has elapsed. Alternatively, if the controller 80 makes a negative determination in step S 116, the controller 80 may determine the magnitude X of vibration in step S 114 as indicated by the dashed line in FIG. 3 without measuring the time T.

In this case, as illustrated in FIG. 5A, after time t8, when the magnitude X of vibration becomes smaller than the third threshold Th3 (time t10), the controller 80 may change the flow rate Q from the third flow rate Q3 to the first flow rate Q1 (time t10; step S 114 to step S 118) as indicated by the dashed lines illustrated in FIG. 5B. Because the flow rate Q becomes smaller so that the damping effect provided by the damper bearing 50 is reduced, the magnitude X of vibration varies in a period from time t10 to time t9 illustrated in FIG. 5A, as indicated by the dashed lines.

Next, another modified example of the above-described embodiment of the invention will be described. In the above-described embodiment, the fluid supply device 60 adjusts the flow rate Q of the fluid on the basis a detection signal from the flow rate detection sensor of the fluid supply device 60. Alternatively, the flow rate Q may be adjusted on the basis of a detection signal from a pressure detection sensor that detects a pressure of the fluid. Specifically, the fluid supply device 60 is provided with the pressure detection sensor, and the fluid supply device 60 adjusts the flow rate Q on the basis of a detection signal from the pressure detection sensor.

In the above-described embodiment, the controller 80 computes the magnitude X of vibration on the basis of the vibration detected by the vibration detection sensor 70. Alternatively, the controller 80 may compute the magnitude X of vibration on the basis of a sound detected by a microphone that is disposed near the tool 21 and that detects a machining sound that corresponds to the vibration of the main spindle 20.

In the above-described embodiment, the first threshold Th1 and the second threshold Th2 are set to different values. Alternatively, the first threshold Th1 and the second threshold Th2 are set equal to each other.

Amain spindle unit (1) includes: a damper bearing (50) that restricts vibrations of a main spindle (20) by being supplied with a fluid; a fluid supply device (60) that supplies the fluid to the damper bearing (50), and that is able to adjust a flow rate (Q) of the fluid; a vibration detection sensor (70) that detects a vibration of the main spindle (20); and a controller (80) that adjusts the flow rate (Q) of the fluid supplied from the fluid supply device (60), based on the magnitude of the vibration detected by the vibration detection sensor (70).

## Claims

1. A main spindle unit comprising:
a main spindle that retains a tool and that is driven to be rotated;
a rolling bearing by which the main spindle is rotatably supported;
a damper bearing that is located closer to the tool than the rolling bearing is, and that restricts vibrations of the main spindle by being supplied with a fluid;
a fluid supply device that supplies the fluid to the damper bearing, and that is able to adjust a flow rate of the fluid;
a vibration detection sensor that detects a vibration of the main spindle; and
a controller that adjusts the flow rate of the fluid supplied from the fluid supply device, based on a magnitude of the vibration detected by the vibration detection sensor.

2. The main spindle unit according to claim 1, wherein when the magnitude of the vibration becomes a value equal to or greater than a first threshold while the fluid is supplied at a first flow rate by the fluid supply device, the controller changes the flow rate of the fluid from the first flow rate to a second flow rate that is higher than the first flow rate.

3. The main spindle unit according to claim 2, wherein after a first set time has elapsed since the flow rate of the fluid is changed from the first flow rate to the second flow rate, the controller changes the flow rate of the fluid to a third flow rate that is lower than the second flow rate but higher than the first flow rate.

4. The main spindle unit according to claim 3, wherein when the magnitude of vibration becomes a value equal to or greater than a second threshold that is set equal to or smaller than the first threshold while the fluid is supplied at the third flow rate by the fluid supply device after the flow rate of the fluid is changed from the second flow rate to the third flow rate, the controller changes the flow rate of the fluid to the second flow rate.

5. The main spindle unit according to claim 3, wherein if the magnitude of vibration is smaller than a second threshold that is set equal to or smaller than the first threshold but is equal to or greater than a third threshold that is set smaller than the second threshold when a second set time has elapsed since the flow rate of the fluid is changed from the second flow rate to the third flow rate, the controller maintains the flow rate of the fluid at the third flow rate.

6. The main spindle unit according to claim 4, wherein if the magnitude of vibration is smaller than the second threshold but is equal to or greater than a third threshold that is set smaller than the second threshold when a second set time has elapsed since the flow rate of the fluid is changed from the second flow rate to the third flow rate, the controller maintains the flow rate of the fluid at the third flow rate.

7. The main spindle unit according to claim 5, wherein if the magnitude of vibration is smaller than the second threshold that is set equal to or smaller than the first threshold and is smaller than the third threshold that is set smaller than the second threshold when the second set time has elapsed since the flow rate of the fluid is changed from the second flow rate to the third flow rate, the controller changes the flow rate of the fluid to the first flow rate.

8. The main spindle unit according to claim 6, wherein if the magnitude of vibration is smaller than the second threshold that is set equal to or smaller than the first threshold and is smaller than the third threshold that is set smaller than the second threshold when the second set time has elapsed since the flow rate of the fluid is changed from the second flow rate to the third flow rate, the controller changes the flow rate of the fluid to the first flow rate.
